# EUROPEAN PATENT APPLICATION

(11) **EP 2 073 207 A1**
(43) Date of publication of application: **24.06.2009**
(21) Application number: 08021310.1
(22) Date of filing: 08.12.2008
(51) Int. Cl.: G11B 20/10, G11B 27/34, G11B 27/10, G11B 27/32, G11B 27/11

(54) **Video reproducing apparatus having a function for resuming an interrupted reproduction**

(30) Priority: 21.12.2007 JP 2007329673
(71) Applicant: Alpine Electronics, Inc., Tokyo (JP)
(72) Inventor: Kimura, Masaru, Iwaki-city Fukushima (JP); Ochiai, Takeshi, Iwaki-city Fukushima (JP)
(74) Representative: Klunker . Schmitt-Nilson . Hirsch

(57) **Abstract**

The invention provides a video reproducing apparatus which performs continued reproduction of a video title in association with continued reproduction of applications. When Power-OFF or Reproduction-Stop of the video reproducing apparatus occurs at a time point when the video title is reproduced to a midpoint of a chapter, continued reproduction information indicating identifiers of an HD DVD disk, a title, and a chapter being reproduced is stored in a memory at the time point. Then, when the power is turned ON without replacing the HD DVD disk, the application for displaying a chapter menu of the title indicated by the identifier in the continued reproduction information, and a script including a command for starting reproduction of the chapter indicated by the identifier in the continued reproduction information, which is activated by the application according to an operation of a button of the chapter menu are specified, and the script is implemented.

## Description

### BACKGROUND OF THE INVENTION

### 1. Field of the Invention

The present invention relates to a technology for performing continued reproduction in a video reproducing apparatus for reproducing a video disk in which a video title is recorded.

### 2. Description of the Related Art

As a technology for performing continued reproduction in a video reproducing apparatus for reproducing a video disk in which a video title is recorded, a technology regarding a video reproducing apparatus for reproducing a DVD in which a video title is recorded according to a DVD-Video standard, in which a point of reproduction of a DVD being reproduced at the time point when the power is turned OFF by a user is stored and the reproduction of the DVD is started from the stored point of reproduction when the power is turned ON again is known (for example, JP-A-2003-203464, JP-A-2002-223411).

Various applications which should be or are able to be implemented together with the video title may be defined on the video disks in which a video title is stored according to HD DVD-Video Standard or BD-video Standard.

Therefore, when continued reproduction of these video disks is performed, it is necessary to store the state of implementation of the applications being implemented in addition to the point of reproduction of the video title at the time point when the power is turned OFF by the user, and the process therefor is complicated, and the amount of information to be stored is huge.

### SUMMARY OF THE INVENTION

Accordingly, it is an object of the invention to provide a video reproducing apparatus for reproducing video disks including an application to be implemented together with a video title defined therein, in which continued reproduction of the video title in association with the continued reproduction of the application is realized in a simple configuration.

In order to achieve the object described above, the invention provides a video reproducing apparatus for reproducing a video disk in which a plurality of applications to be implemented at the time of reproduction of the video disk are recorded together with a video title including a plurality of chapters including: a continued reproduction information storing unit that stores an identification of a chapter being reproduced when the power is turned OFF, and a continued reproduction starting unit that implements a process to be implemented by the applications stored in the video disk including starting of reproduction of the chapter whose identification is stored in the continued reproduction information storing unit when the power is turned ON.

In order to achieve the object described above, the invention also provides a video reproducing apparatus for reproducing a video disk in which a plurality of applications to be implemented at the time of reproduction of the video disk are recorded together with a video title including a plurality of chapters including: a continued reproduction information storing unit that stores an identification of a chapter being reproduced when the reproduction of the video disk is stopped; and a continued reproduction starting unit that implements a process to be implemented by the applications stored in the continued reproduction information storing unit including starting of the reproduction of the chapter whose identification is stored in the continued reproduction information storing unit when the the reproduction of the video disk is started.

The video reproducing apparatus as described above may be configured in such a manner that the continued reproduction starting unit issues an inquiry whether or not the continued reproduction is wanted to a user when the power is turned ON and, only when the continued reproduction is demanded by the user, the process to be implemented by the application stored in the video disk including starting of the reproduction of the chapter whose identification is stored in the continued reproduction information storing unit is carried out.

More specifically, the video reproducing apparatus as described above may be configured in such a manner that the continued reproduction starting unit implements a process, which is implemented by an application stored in the video disk for displaying a chapter menu for accepting selection of chapter from the user and implementing the process including starting the reproduction of the chapter which is selected and accepted on the chapter menu when the application accepts the selection of the chapter whose identification is stored in the continued reproduction information storing unit on the chapter menu.

According to the video reproducing apparatus as described above, although it is not able to restart the reproduction accurately from a point of reproduction being reproduced at the time point when the power is previously turned OFF or when the reproduction is previously stopped when the power is turned ON or when the reproduction is started, it is able to start the reproduction from a chapter break point immediately before the point of reproduction being reproduced, that is, from the beginning of the chapter being reproduced. When the continued reproduction is performed, restarting the reproduction from the beginning of the chapter which has been reproduced, which is immediately before the point of reproduction being reproduced and is a good point to restart in terms of a configuration of the story of the video title is also significant for enabling the user to view the video title after restart smoothly.

On the other hand, the process implemented by the video reproducing apparatus when the power is turned ON or when the reproduction is started is a process defined by a producer of the video title, and hence is expected to be a process which activates an application which is needed or preferred to be implemented together with the chapter whose reproduction is started by this process together with starting of the reproduction of the corresponding chapter. Therefore, according to the video reproducing apparatus as described above, realization of the continued reproduction of the video title in association with continued reproduction of the application is expected in a simple configuration which does not require storing of the state of implication of the application when the power is turned OFF or when the reproduction is stopped.

In order to achieve the object described above, the invention provides a video reproducing apparatus for reproducing a video disk in which a video title including a plurality of chapters is recorded including: a continued reproduction information storing unit that stores an identification of a chapter being reproduced when the power is turned OFF, and a continued reproduction information display unit that displays identifications of the chapters stored in the continued reproduction information storing unit when the power is turned ON.

In order to achieve the object described above, the invention provides a video reproducing apparatus for reproducing a video disk in which a video title including a plurality of chapters is recorded including: a continued reproduction information storing unit that stores an identification of a chapter being reproduced when the reproduction of the video disk is stopped, and a continued reproduction information display unit that displays identifications of the chapters stored in the continued reproduction information storing unit when the reproduction of the video disk is started or when the power is turned ON.

According to the video reproducing apparatus having the continued reproduction information display unit as described above, the identification of the chapter being reproduced when the power is turned OFF or when the reproduction is previously stopped is displayed when the power is turned on or when the reproduction is started, and hence the user is able to restart the reproduction from the beginning of the chapter viewed previously immediately by following the display and using the chapter menu described above.

In the video reproducing apparatus described above, the video disk may be an HD DVD having a video content stored according to HD DVD-Video Standard or may be a Blu-ray Disc having a video content stored according to BDMV Standard.

As described above, according to the invention, in the video reproducing apparatus for reproducing the video disks in which the applications to be implemented together with the video title is defined, the continued reproduction of the video title in association with the continued reproduction of the application is realized in a simple configuration.

### BRIEF DESCRIPTION OF THE DRAWINGS

Fig. 1 is a block diagram showing a configuration of a video reproducing apparatus according to an embodiment of the invention;
Figs. 2A and 2B are flowcharts showing a process for realizing continued reproduction according to the embodiment of the invention;
Fig. 3 is a drawing showing an example of operation of the continued reproduction according to the embodiment of the invention;
Figs. 4A and 4B are drawings showing examples of a display screen of the video reproducing apparatus according to the embodiment of the invention.

### DESCRIPTION OF EMBODIMENTS

Hereinafter, a video reproducing apparatus according to an embodiment of the invention will be described with an example of a video reproducing apparatus which reproduces an HD DVD having a video content recorded therein according to HD DVD-Video Standard.

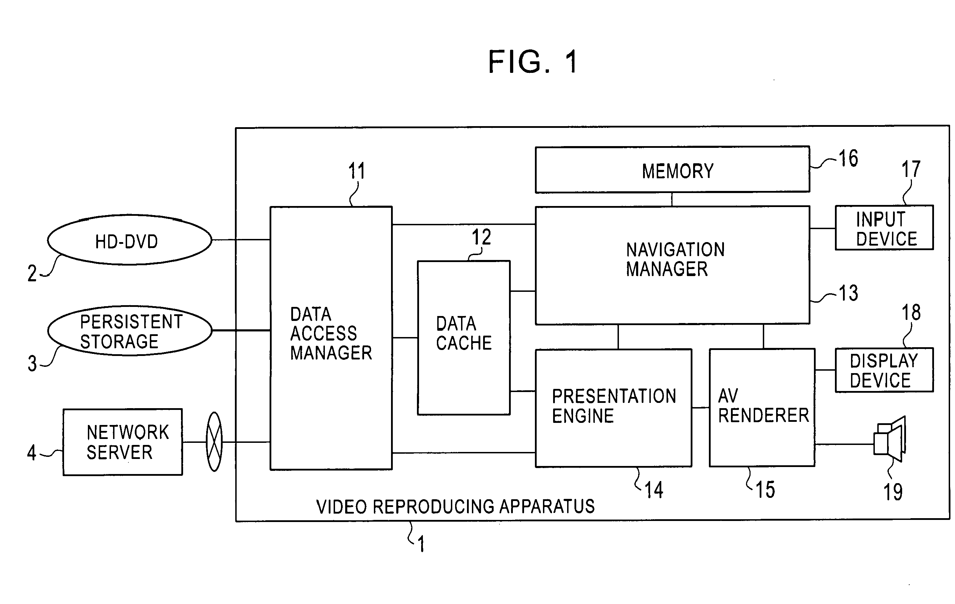

Fig. 1 shows a configuration of the video reproducing apparatus according to the embodiment. As shown in Fig. 1, a video reproducing apparatus 1 includes a data access manager 11, a data cache 12, a navigation manager 13, a presentation engine 14, an AV renderer 15, a memory 16, an input device 17, a display device 18, and a speaker 19. The video reproducing apparatus 1 in this configuration may be a computer having a general configuration having a microprocessor, a memory, and other peripheral devices in terms of hardware and, in this case, may be realized as a process which is achieved by the microprocessor executing a program prepared in advance for components of the video reproducing apparatus 1 other than the input device 17, the display device 18, and the speaker 19 shown above. In this case, such program may be provided to the computer via the recording medium or an adequate communication channel.

In this configuration of the video reproducing apparatus 1 as described above, the navigation manager 13 controls reproduction of a primary video set, a secondary video set, an application, and an advanced subtitle with a unit of title on the basis of a playlist read out from an HD DVD disk 2 via the data access manager 11 or the data cache 12. A plurality of chapters may be defined for each title.

The presentation engine 14 decodes output videos and output voices of the primary video set, the secondary video set, the application, or the advanced subtitle from data obtained from the HD DVD disk 2, a persistent storage 3, or a network server 4 on the network under the control of the navigation manager 13. Then, the AV renderer 15 draws and synthesizes respective output videos decoded by the presentation engine 14 and displays on the display device 18, and synthesizes the output voices decoded by the presentation engine 14 and outputs the same to the speaker 19.

The primary video set and the secondary video set are video objects, and the advanced subtitle is an explanatory title object.

On the other hand, the application includes manifests, markups and scripts, and the manifests indicate initialization information of the application.

The markups define output video/voice of the application built up using buttons, images, voices, animations and fonts. With the markups, an interactive user interface such as chapter menus or other menus is defined. The scripts are programs which control the respective applications and various reproducing operations of the video reproducing apparatus 1, and the scripts may include a script which performs a predetermined process in response to occurrence of a key operation of the input device 17, and a script activated by selection of a display object such as a button on the output video of the application, which is displayed by the definition of the markup.

In the video reproducing apparatus 1 in this configuration, a continued reproduction information storing process and a continued reproduction starting process performed by the navigation manager 13 for continued reproduction.

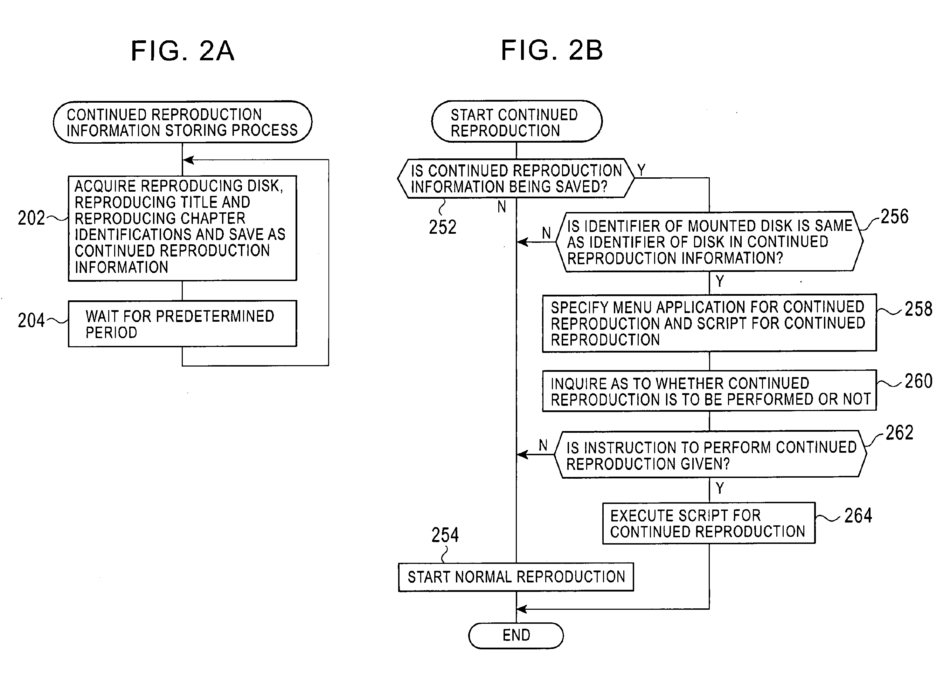

First of all, the continued reproduction information storing process will be described. In Fig. 2A, a procedure of the continued reproduction information storing process will be shown.

As shown in Fig. 2A, in this process, an identifier of the HD DVD disk 2 being reproduced, an identifier of a title being reproduced (title number, for example), an identifier of the chapter being reproduced (chapter number, for example) are acquired, and a process of storing these identifiers in the memory 16 as a continued reproduction information (Step 202) is repeated at a predetermined interval (for example, one second) (Step 204). However, this process may be replaced by a process of acquiring the identifier of the HD DVD disk 2 being reproduced, the identifier of the title being reproduced, and the identifier of the chapter being reproduced upon occurrence of a Power-OFF operation by a user and storing the same in the memory 16 as the continued reproduction information prior to the Power-OFF operation, and acquiring the identifier of the HD DVD disk 2 being reproduced, the identifier of the title being reproduced and the identifier of the chapter being reproduced upon occurrence of a reproduction-stop operation by the user and storing the same in the memory 16 as the continued reproduction information prior to the Reproduction-OFF operation of the HD DVD disk 2.

Subsequently, the continued reproduction starting process will be described. The continued reproduction starting process is a process to be started when the power of the video reproducing apparatus is turned ON with the HD DVD disk 2 mounted thereon, and when a reproduction starting operation is conducted by the user with the HD DVD disk 2 in a reproduction-stopped state (paused state is not included) mounted on the video reproducing apparatus in a Power-ON state. Fig. 2B shows a procedure of the continued reproduction starting process. As shown in Fig. 2B, in this process, whether the continued reproduction information is stored in the memory 16 is inspected (Step 252) and, if not, reproduction according to a playlist for earliest reproduction stored in the HD DVD disk 2 is started, whereby the normal reproduction of the HD DVD disk 2 is started (Step 254), thereby ending the process.

In contrast, when the continued reproduction information is stored in the memory 16, whether the identifier of the HD DVD disk 2 being mounted matches the identifier of the HD DVD disk 2 included in the continued reproduction information is inspected (Step 256) and, if not, the procedure goes to Step 254, where the normal reproduction of the HD DVD disk 2 is started, thereby ending the process.

In contrast, when the identifier of the HD DVD disk 2 being mounted matches the identifier of the HD DVD disk 2 included in the continued reproduction information, a menu application for continued reproduction and a script for continued reproduction are specified from among the applications recorded in the HD DVD disk 2 (Step 258).

The menu application for continued reproduction is an application for displaying a menu (so-called a chapter menu) for accepting a Reproduction-Start command from the user for reproducing the chapter including the chapter indicated by the identifier of the chapter included in the continued reproduction information and having the title indicated by the identifier of the title included in the continued reproduction information. Such an application may be obtained as an application in which a process for selectively performing the script including a chapter reproduction startup command ("chapter_jump 0", for example) provided respectively in each of the plurality of chapters including the chapter indicated by the identifier of the chapter included in the continued reproduction information and having the title with the identifier of the title included in the continued reproduction information according to a user operation is defined.

In the HD DVD disk 2, the application which displays the chapter menu is a first kind of application which is a playlist-related advanced application in most cases, and then is a application other than the playlist-related advanced application, which is a second kind of application which is an application which is defined as a presentation object which is effective for the entire duration of the title having nonscheduled asynchronous attributes in many cases. Therefore, when specifying the menu application for continued reproduction, it is preferable to achieve specification by searching the menu application for continued reproduction in the order of the first kind of application, the second kind of application, and other applications.

Whether or not it is the playlist-related advanced application is identified by the description such as PlaylistApplication of PlaylistApplication element of TitleSet element, and presence or absence of the nonscheduled, asynchronous attributes, and the effective duration are identified by the description of title TimeBegin/End, sync, autorun of the ApplicationSegment element of each application.

Then, the script for continued reproduction is a script activated according to the user operation in the menu application for continued reproduction, and is obtained as a script including the Reproduction-Rtart command ("chapter_jump 0", for example) of the chapter indicated by the identifier of the chapter included in the continued reproduction information having the title indicated by the identifier of the title in the continued reproduction information.

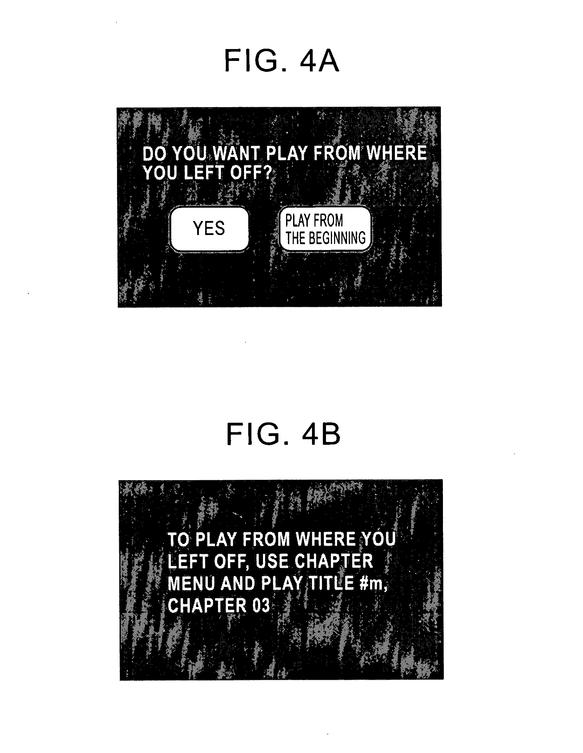

Then, for example, a screen for inquiring the user whether to perform the continued reproduction or to reproduce from the beginning of the HD DVD disk 2 as shown in Fig. 4A is displayed on the display device 18 via the AV renderer 15 (Step 260). When the reproduction from the beginning is instructed (Step 262), the procedure goes to Step 254, where the normal reproduction of the HD DVD disk 2 is started, thereby ending the process.

In contrast, when the continued reproduction is instructed by the user (Step 282), the specified script for continued reproduction is performed, thereby ending the process.

The continued reproduction starting process has been described.

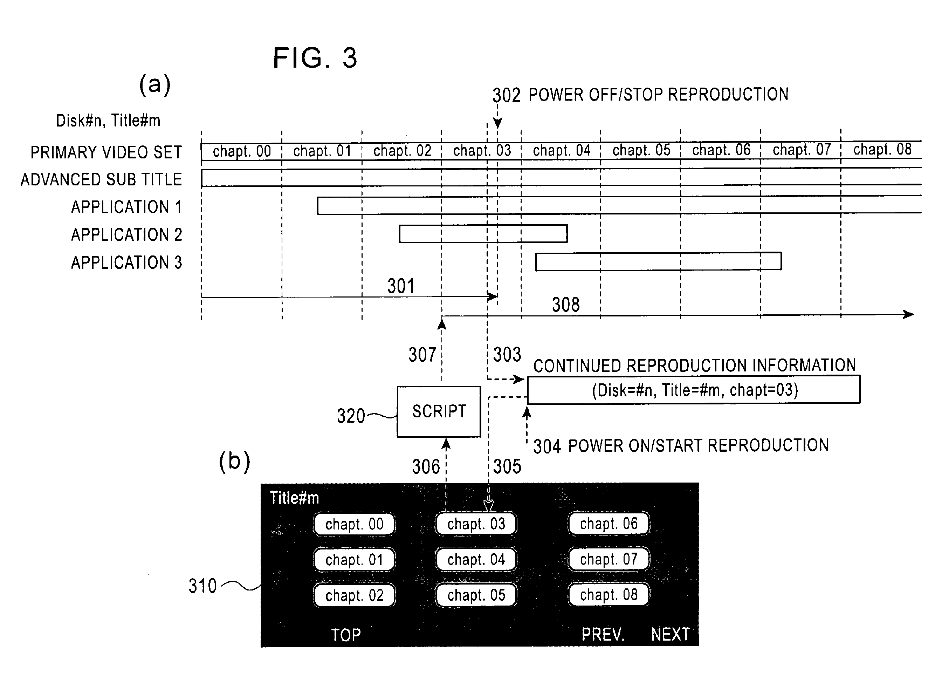

Subsequently, an example of operation of the continued reproduction by the video reproducing apparatus 1 as described above is shown in Fig. 3.

A case in which the reproduction of a title having an identifier #m in the HD DVD disk 2 having an identifier #n is defined by the playlist as shown in Fig. 3A will be exemplified.

In this case, when the reproduction of the title having the identifier #m is started, the video of the primary video set is reproduced from Chapter 00 in sequence of the number, and synchronously, an explanatory title is displayed by the advanced subtitle. When the reproduction of the video of the primary video set is advanced to a midpoint of Chapter 01, implementation of an application 1 is started, and when the reproduction of the video of the primary video set is advanced to the midpoint of Chapter 02, implementation of an application 2 is started.

When Power-OFF or Reproduction-Stop of the video reproducing apparatus 1 occurs (302) at a time point when the title is reproduced (301) to the midpoint of Chapter 03 in the manner described above, the continued reproduction information to be stored in the memory 16 from this point onward indicates the identifier #n of the HD DVD disk 2 being reproduced, the identifier #m of the title being reproduced, and an identifier 03 of the chapter being reproduced which are stored (303) finally by the continued reproduction information storing process.

Subsequently, when turning ON of the power or the reproduction starting operation occurs in the state of Power ON and Reproduction-Stop without replacement of the HD DVD disk 2 (304), an application which displays a chapter menu having a title of the identifier #m of the title which is indicated by the continued reproduction information as shown in Fig. 3B is specified (305) as the application for continued reproduction, and a script 320 including a command for starting the reproduction of the identifier 03 of the chapter included in the continued reproduction information, which is activated by the application according to the operation of the button of Chapter 3 in the chapter menu, is specified as the script for continued reproduction (306) and is implemented.

The script 320 is a script which is prepared by a producer of the video content of the HD DVD, and this script includes a command to start the reproduction of the primary video set or the advanced subtitle for displaying the explanatory title synchronously with the primary video set from the beginning of Chapter 03 as well as a command for starting applications which the producer of the video content considers to be necessary or desirable to implement at the same time as starting of Chapter 03, and the application including the startup command is expected to be the application 1 and the application 2, which are the same as the application which to be implemented during the reproduction of Chapter 03 when the title #m is reproduced from the beginning according to the playlist.

When the startup command of the application 1 and the application 2 are included in this script 320, reproduction of the primary video set and the advanced subtitle is started from the beginning of Chapter 03, and the implementation of the application 1 and the application 2 is started (308) by the implementation of the script 320 (307).

The embodiment of the invention has been described thus far.

As described thus far, according to the embodiment, although it is not able to restart the reproduction accurately from the point of reproduction being reproduced at the time point when the power is previously turned OFF or when the reproduction is previously stopped when the power is turned on or when the reproduction is started, it is able to reproduce from the chapter break point immediately before the point of reproduction being reproduced, that is, from the beginning of the chapter being reproduced. When the continued reproduction is carried out, restarting the reproduction from the beginning of the chapter which has been reproduced, which is immediately before the point of reproduction being reproduced and is a good point to restart in terms of a configuration of the story of the title is also significant for enabling the user to view the title after restart smoothly.

On the other hand, the script implemented by the video reproducing apparatus 1 when the power is turned ON or when the reproduction is started is a script defined by the producer of the video title, and hence is expected to be a script which starts an application which is needed or preferred to be implemented together with the chapter restarted by this script simultaneously with the start of reproduction of the corresponding chapter. Therefore, according to the video reproducing apparatus 1 as described above, realization of the continued reproduction of the video title in association with continued reproduction of the application is expected in a simple configuration which does not require storing of the state of implication of the application when the power is turned OFF or when the reproduction is stopped.

The continued reproduction starting process described above may be replaced by a process of starting the normal reproduction of the HD DVD disk 2 when the power of the video reproducing apparatus is turned ON with the HD DVD disk 2 mounted thereon, and when the reproduction starting operation is conducted by the user with the HD DVD disk 2 in the reproduction-stopped state mounted on the video reproducing apparatus in the Power-ON state, and subsequently, displaying the screen for inquiring the user whether to perform continued reproduction or not on the display device 18 via the AV renderer 15 when the above-described menu application for continued reproduction is implemented, and implementing the script for continued reproduction described above when the continued reproduction is instructed by the user.

The continued reproduction starting process described above may be replaced by a process of starting the normal reproduction of the HD DVD disk 2 when the power of the video reproducing apparatus is turned ON with the HD DVD disk 2 mounted thereon, and when the reproduction starting operation is conducted by the user with the HD DVD disk 2 in the reproduction-stopped state mounted on the video reproducing apparatus in the Power-ON state, and subsequently, regarding the application being reproduced when an operation to request a predetermined continued reproduction from the user occurs as the menu application for continued reproduction and implementing the script for continued reproduction activated from the corresponding menu application for continued reproduction. In this case, a predetermined error notification is displayed when the script for continued reproduction is not included in the script activated from the application regarded as the menu application for continued reproduction.

The continued reproduction starting process described above may be a process of notifying the identifier of the title of the continued reproduction information and the identifier of the chapter of the continued reproduction information, that is, displaying a screen as shown in Fig. 4B on the display device 18 via the AV renderer 15 in a case in which the continued reproduction information is stored in the memory 16 when the power of the video reproducing apparatus is turned ON with the HD DVD disk 2 mounted thereon, and when the reproduction starting operation is conducted by the user with the HD DVD disk 2 in the reproduction-stopped state mounted on the video reproducing apparatus in the Power-ON state.

In this configuration, when the power is tuned on or when the reproduction is started, the identification of the title and the chapter being reproduced when the power is turned OFF or when the reproduction is previously stopped is displayed, and hence the user is able to restart the reproduction from the beginning of the chapter viewed previously immediately by following the display and using the chapter menu described above.

Although the application of the invention to the video reproducing apparatus 1 for reproducing the HD DVD in which the video content is stored according to HD DVD-Video Standard has been exemplified for description, the embodiment is also applicable in the same manner to the video reproducing apparatus 1 for reproducing the Blu-Ray Discs in which the video content is stored according to BDMV Standard or to the video reproducing apparatus 1 for reproducing DVDs in which the video content is stored according to DVD-Video Standard.

## Claims

1. A video reproducing apparatus (1) for reproducing a video disk (2) in which a plurality of applications to be implemented at the time of reproduction of the video disk are recorded together with a video title including a plurality of chapters including:
a continued reproduction information storing unit (16) that stores an identification of a chapter being reproduced when the power is turned OFF or when the reproduction of the video disk is stopped; and
a continued reproduction starting unit (11-13) that implements a process to be implemented by the applications stored in the continued reproduction information storing unit (16) including starting of the reproduction of the chapter whose identification is stored in the continued reproduction information storing unit when the power is turned ON or when the reproduction of the video disk is started.

2. The video reproducing apparatus according to Claim 1, wherein the continued reproduction starting unit (11-13) issues an inquiry whether or not the continued reproduction is wanted to a user when the power is turned ON or when the reproduction of the video disk (2) is started and, only when the continued reproduction is demanded by the user, the process to be implemented by the applications recorded in the video disk including starting of the reproduction of the chapter whose identification is stored in the continued reproduction information storing unit is carried out.

3. The video reproducing apparatus according to Claims 1 or 2, wherein the continued reproduction starting unit (11-13) implements a process, which is implemented by an application recorded in the video disk (2) for displaying a chapter menu for accepting selection of chapter from the user and implementing the process including starting the reproduction of the chapter which is selected and accepted on the chapter menu when the application accepts the selection of the chapter whose identification is stored in the continued reproduction information storing unit (16) on the chapter menu.

4. The video reproducing apparatus according to Claims 1, 2, or 3, wherein the continued reproduction information storing unit (16) stores an identification of the chapter being reproduced by storing an identifier (#n) of the video disk being reproduced, an identifier (#m) of the video title being reproduced, and an identifier of the chapter being reproduced.

5. The video reproducing apparatus according to Claim 4, wherein the continued reproduction starting unit (11-13) specifies an application which displays a chapter menu of a title indicated by the identifier (#m) of the video title stored in the continued reproduction information storing unit (16) as an application for continued reproduction, specifies a script including a command for starting the reproduction of the chapter indicated by the chapter identifier stored in the continued reproduction information storing unit (16) as a script for continued reproduction, and implements the same.

6. The video reproducing apparatus according to Claim 5, wherein the continued reproduction starting unit (11-13) specifies the application for continued reproduction and specifies the script for continued reproduction when the identifier (#n) of the mounted video disk (2) matches the identifier (#n) of the video disk stored in the continued reproduction information storing unit (16).

7. The video reproducing apparatus according to one of Claims 1 to 6, wherein the video disk (2) is an HD DVD in which a video content is stored according to HD DVD-Video Standard.

8. The video reproducing apparatus according to one of Claims 1 to 6, wherein the video disk (2) is a Blu-ray Disc in which a video content is stored according to BDMV Standard.

9. A method of continuous reproduction for performing continued reproduction by a video reproducing apparatus (1) for reproducing a video disk (2) in which a plurality of applications to be implemented at the time of reproduction of the video disk are recorded together with a video title including a plurality of chapters comprising steps of:
storing an identification of a chapter being reproduced when the power is turned OFF or when the reproduction of the video disk is stopped; and
implementing a process to be implemented by an application stored in the video disk, including a process of starting reproduction of the chapter whose identification is stored when the power is turned ON or when the reproduction of the video disk is started.
